# EUROPÄISCHE PATENTSCHRIFT

(11) **EP 0 701 633 B1**
(45) Veröffentlichungstag und Bekanntmachung des Hinweises auf die Patenterteilung: **08.01.1997**
(21) Anmeldenummer: 94918369.3
(22) Anmeldetag: 26.05.1994
(51) Int. Cl.: C23C 6/00, B32B 5/18, B32B 15/01, B60R 13/08

(54) **VERFAHREN UND VORRICHTUNG ZUR HERSTELLUNG EINES VERBUNDBAUTEILS UND SEINE VERWENDUNG**
METHOD AND DEVICE FOR MANUFACTURING A COMPOSITE COMPONENT AND ITS USE
PROCEDE ET DISPOSITIF POUR LA FABRICATION D'UN ELEMENT COMPOSITE ET SON UTILISATION

(30) Priorität: 04.06.1993 DE 4318540
(43) Veröffentlichungstag der Anmeldung: 20.03.1996
(73) Patentinhaber: Bayerische Motoren Werke Aktiengesellschaft, 80788 München (DE)
(72) Erfinder: MÄRTZ, Josef, D-85386 Eching (DE); MAYER, Stephan, D-82194 Gröbenzell (DE)
(86) Internationale Anmeldenummer: EP9401682
(87) Internationale Veröffentlichungsnummer: WO9429490

(56) Entgegenhaltungen:
- WO-A-91/01387
- GB-A- 2 274 118
- US-A- 3 704 193
- US-A- 4 973 358

## Beschreibung

Die Erfindung bezieht sich auf ein Verfahren zur Herstellung eines Verbundbauteils nach dem Oberbegriff des Anspruchs 1 sowie auf eine Vorrichtung zur Durchführung des Verfahrens sowie auf die Verwendung eines Verbundbauteils.

Die JP-OS 1-275831 A beschreibt die Herstellung eines Aluminium-Verbundbauteils: Von einem Aluminiumschaumblock werden dünne Aluminiumschaumscheiben abgeschnitten und mit einem Aluminiumblech großflächig verklebt.
Das bekannte Herstellungsverfahren für ein gattungsgemäßes Verbundbauteil ist sehr aufwendig: In einem ersten Schritt wird ein Aluminiumschaumblock hergestellt, von dem in einem zweiten Schritt ebene Aluminiumscheiben abgetrennt werden. Im dritten Schritt werden diese Scheiben mit dem Aluminiumblech verklebt. Da die zu verklebenden Oberflächen der Aluminiumschaumscheiben aufgrund des Schneidevorgangs offene Poren aufweisen, sind beträchtliche Mengen an Kleber erforderlich, was auch zu einer Gewichtserhöhung des Verbundbauteils beiträgt. Außerdem eignet sich das beschriebene Verfahren nur zur Herstellung ebener Verbundbauteile.

Aufgabe der Erfindung ist es daher, ein Verfahren und eine Vorrichtung zur einfachen, schnellen und kostengünstigen Herstellung eines Verbundbauteils bereitzustellen, so daß die Nachteile des Standes der Technik vermieden werden können.

Diese Aufgabe wird durch die kennzeichnenden Merkmale des Anspruchs 1 gelöst. Die Ansprüche 8 bis 10 betreffen erfindungsgemäße Vorrichtungen zur Durchführung des Verfahrens.
Kerngedanke der Erfindung ist es, die Verbindung zwischen Metallplatte und Metallschaum nach Art einer Diffusionshaftung herzustellen, indem heißer, nicht vorgeformter Metallschaum direkt auf die Metallplatte aufgebracht wird. Hierbei bietet es sich an, die Herstellung des Verbundbauteils unmittelbar an die Herstellung des Metallschaums zu koppeln. Durch diese Maßnahme wird nicht zuerst ein Metallschaumblock hergestellt, der nach seiner Abkühlung wieder in Metallschaumscheiben zerschnitten und in einem getrennten Arbeitsgang mit der Metallplatte verklebt werden muß, sondern Schaumherstellung und Herstellung des Verbundbauteils erfolgen unmittelbar aufeinander. Hierdurch steht ein einfaches und wirtschaftliches Verfahren zur Verfügung, mit dem ohne Einsatz eines Klebemittels gattungsgemäße Verbundbauteile hergestellt werden können.
Der Metallschaum befindet sich erfindungsgemäß in einem noch formbaren Zustand, bevorzugt im schmelzflüssigen Zustand. Auch teigiger Metallschaum ("semisolid foam") kann verarbeitet werden.
Unter "Metall..." ist im Zusammenhang mit der Erfindung eine Metallegierung mit viskositätssteigernden Komponenten, die zur Stabilisierung der schmelzflüssigen Schaumstruktur dienen, zu verstehen.
Die "Metallplatten" des Erfindungsgegenstandes sind nicht notwendigerweise ebene Gebilde, sondern können innerhalb weiter Grenzen in ihren Abmessungen und in ihrer Form beliebig geformt sein, wie dies z. B. bei durch Tiefziehen vorgeformten metallischen Karosseriebauteilen der Fall ist.

Die Weiterbildung der Erfindung nach Anspruch 2 gewährleistet eine sichere und belastbare Verbindung zwischen Metallschaum und Metallplatte, indem durch die Vorwärmung der Metallplatte eine die Diffusionshaftung behindernde Abkühlung des Metallschaums an der Berührungsfläche mit der Metallplatte vermieden wird.

Auch die Ausgestaltung der Erfindung nach Anspruch 3 schafft die Voraussetzung für eine Verbindung der beiden Bauteilkomponenten. Das eingesetzte Geliermittel setzt die Oberflächenspannungen herab und bewirkt unter Umständen auch ein Anlösen der Metallplattenoberfläche.

Durch die vorteilhafte Ausführung der Erfindung nach Anspruch 4 steht ein großtechnisch anwendbares Herstellverfahren zur Verfügung, mit dem in kostengünstiger Weise die automatisierte Serienproduktion von Verbundbauteilen ermöglicht wird. Hierbei wird der Metallschaum in einem kontinuierlichen Prozeß einer Kante der Metallplatte, die z. B. als endloses Metallblech ausgeführt sein kann, zugeführt, wodurch ein Einlegen und Entnehmen einzelner Metallplatten entfällt.
Die Schaumherstellung kann hierbei z. B. nach dem in der US 4,973,358 A beschriebenen Verfahren erfolgen.

Mit dem nach Anspruch 5 weitergebildeten Verfahren ist es möglich, in einfacher Weise die Dicke der Metallschaumschicht individuell einzustellen, wobei die Regulierungseinrichtung für eine gleichbleibende Dicke und eine geglättete Oberfläche sorgt.
Die Beheizung der Regulierungseinrichtung (Anspruch 6) erleichtert die Herstellung einer ebenen Oberfläche der Metallschaumschicht. Je nach Temperatur und Gestaltung der Regulierungseinrichtung ist es möglich, eine geschlossene Metallschaumoberfläche zu erzielen. Somit kann das fertige Verbundbauteil auch auf der Metallschaumseite in einfacher Weise gereinigt oder mit weiteren Anbauteilen versehen werden.
Zur Abkühlung des Metallschaums ist es beispielsweise möglich, nachgeschaltet an die Regulierungseinrichtung eine Abkühlvorrichtung mit dem Metallschaum zugewandten Luftaustrittsöffnungen vorzusehen.

Das verbesserte Herstellverfahren nach Anspruch 7 ist besonders wirtschaftlich, da die Verbundbauteile zum Verprägen nicht aus der Vorrichtung entnommen und in eine separate Prägevorrichtung eingelegt werden müssen. Außerdem kann die Verprägung der Verbundbauteile je nach eingesetztem Material und gestellten Anforderungen individuell bei der richtigen Temperatur erfolgen, indem zwischen Regulierungs- und Prägeeinrichtung entweder beheizt oder abgekühlt wird. Durch den Einsatz eines Präge-/Schneidwerkzeuges ist ein kombiniertes Verprägen und Beschneiden in einem Arbeitsgang möglich, wodurch Herstellungskosten und -dauer sinken und Bauteiltoleranzen minimiert werden können. Dem Verbundbauteil kann sowohl auf der Metallplatten- als auch der Metallschaumseite die gewünschte Kontur aufgeprägt werden.

Das Verfahren gemäß Anspruch 8 verwendet eine einfach zu handhabende Gußform, die nach dem Prinzip einer Kuchenform arbeitet. Die Metallplatte selbst bildet das Unterteil der Form und wird zum Bestandteil des späteren Verbundbauteils. Das Oberteil der Form ist in das seitliche Einfassungsteil der Form absenkbar. Dieses Prinzip gewährt eine große Freiheit hinsichtlich der Formgebung des Verbundbauteils: Wandstärken und Konturen können weitestgehend frei gewählt werden. Mit dem beschriebenen Verfahren können sowohl einfache als auch komplizierte Verbundbauteile hergestellt werden. Die Wandstärke des Metallschaumes kann hierbei konstant oder über der Flächenerstreckung der Metallplatte variabel sein. Die Metallplatte kann eben oder vorgeformt sein. Das Oberteil kann kongruent zur Metallplatte oder beliebig geformt sein. Durch Kraftbeaufschlagung des Oberteils in Richtung auf die Metallplatte kann der Metallschaum zumindest in seinen oberflächennahen Bereichen geringfügig verdichtet werden, woraus sich eine geschlossene Oberfläche ergibt. Auch durch Erwärmung der einzelnen Gußformteile kann eine geschlossene Oberfläche der Metallschaumschicht erzielt werden. Insbesondere die Metallplatte ist zum Zwecke einer sicheren Verbindung vorzuwärmen.
Der für die Beschickung der Gußform erforderliche Metallschaum kann beispielsweise durch das in der WO 91/01387 A1 beschriebene Verfahren hergestellt werden. Alternativ kann Metallschaum auch aus dem Schmelztiegel der US 4,973,358 A abgeschöpft und in die Gußform eingebracht werden. Daneben kommen auch andere Herstellverfahren zur Bereitstellung von Metallschaum in Frage.

Die Vorrichtung nach Anspruch 9 ermöglicht einen kontinuierlichen und automatisierten Herstellungsprozeß, bei dem beispielsweise Metallblech vom Coil schnell, kostengünstig und in gleichbleibender Qualität mit Metallschaum beschichtet wird. Durch den Entfall von Einlegearbeiten, wie dies bei einzelnen Metallplatten der Fall wäre, ist ein hoher Ausstoß möglich.
Umlenk- und Transporteinrichtung können beispielsweise zusammengefaßt und als im Bereich der Zuführeinrichtung angeordnete angetriebene Rolle ausgebildet sein. Ebenso ist es denkbar, eine Umlenkrolle im Bereich der Zuführeinrichtung und ein großflächiges, auch der Führung des Metallbleches dienendes Transportband zu verwenden. Zwar ist aus der US 4,973,358 A eine Vorrichtung bekannt, die mit einem Transportband arbeitet, jedoch dient diese Vorrichtung lediglich der Herstellung von Metallschaum: Der auf das hitzebeständige Transportband aufgebrachte Metallschaum erstarrt unter Bildung einer unregelmäßigen Oberfläche mit zunehmender Entfernung vom Schmelztiegel und wird im festen Zustand vom Transportband zur weiteren Bearbeitung abgenommen. Im Unterschied hierzu handelt es sich beim Erfindungsgegenstand um eine Vorrichtung zur Herstellung eines kompletten Verbundbauteils, wobei das Prinzip der Bereitstellung des Metallschaums gemäß dem US-Patent durchaus eingesetzt werden kann. Generell sind jedoch auch andere Verfahren zur Metallschaumherstellung möglich.

Durch die Weiterbildung der Erfindung nach Anspruch 10 steht eine Vorrichtung zur Verfügung, bei der durch die Aneinanderreihung der beiden Stationen (Beschichtung, Verprägung) die kontinuierliche Herstellung von Verbundbauteilen in einem durchlaufenden Produktionsprozeß möglich ist. Durch den Entfall von Einlege- und Entnahmearbeiten zwischen den Stationen ergibt sich eine Verkürzung der Herstellzeit, somit hohe erreichbare Stückzahlen und niedrige Herstellkosten. Die Herstellung kann weitestgehend automatisiert erfolgen.
Die Präge- und Schneideeinrichtung muß in ihrer abgesenkten Position mit der Transporteinrichtung für das Verbundbauteil mitbewegt werden, z. B. durch Einrasten beim Aufsetzen auf seitliche Führungen der Transporteinrichtung.

Anspruch 11 beschreibt eine besonders vorteilhafte Verwendung eines Verbundbauteils: Durch die Kombination der beiden Komponenten steht einerseits mit dem Metallblech eine lackierbare Karosserieaußenhaut nahezu beliebiger Formgebung zur Verfügung. Der Metallschaum auf der Innenseite kann andererseits verschiedene Aufgaben erfüllen, z. B. Erhöhung der Steifigkeit der Außenhaut oder Schalldämmung. So kann beispielsweise durch den Einsatz von Metallschaum ein versteifendes Karosserieinnenblech entfallen, das in vielen Fällen aufwendig in der Herstellung ist und sich durch relativ hohes Gewicht auszeichnet. Gleichzeitig kann der versteifende Metallschaum Schallschutzaufgaben übernehmen. Mögliche Anwendungen sind beispielsweise erfindungsgemäße Verbundbauteile als Front- und Heckklappen, Schiebedachdeckel, etc. Im Falle der Frontklappe ist weiterhin von Vorteil, daß der Metallschaum nicht brennbar ist.
Neben Außenhautteilen können erfindungsgemäße Verbundbauteile jedoch auch im Fahrzeuginneren verwendet werden, beispielsweise als Trennwand zwischen Motor- und Innenraum. Hier kommen dem Metallschaum in erster Linie Schallabsorptionsaufgaben zu.
Verbundbauteile im Fahrzeugfront- und Fahrzeugheckbereich mit entsprechend dicken Metallschaumschichten eignen sich in besonderer Weise zur Stoßabsorption durch plastische Verformung des Metallschaums.
Die Befestigung von Verkleidungen oder Anbauteilen an der Metallschaumschicht ist in besonders einfacher Weise möglich, z. B. durch Blechschrauben. Auch dübelartige Befestigungselemente, die mit ihren Widerhaken mit den zahlreichen, scharfkantigen, dünnen Trennwänden der bläschenartigen Hohlräume des Metallschaumes zusammenwirken, eignen sich in besonderer Weise.

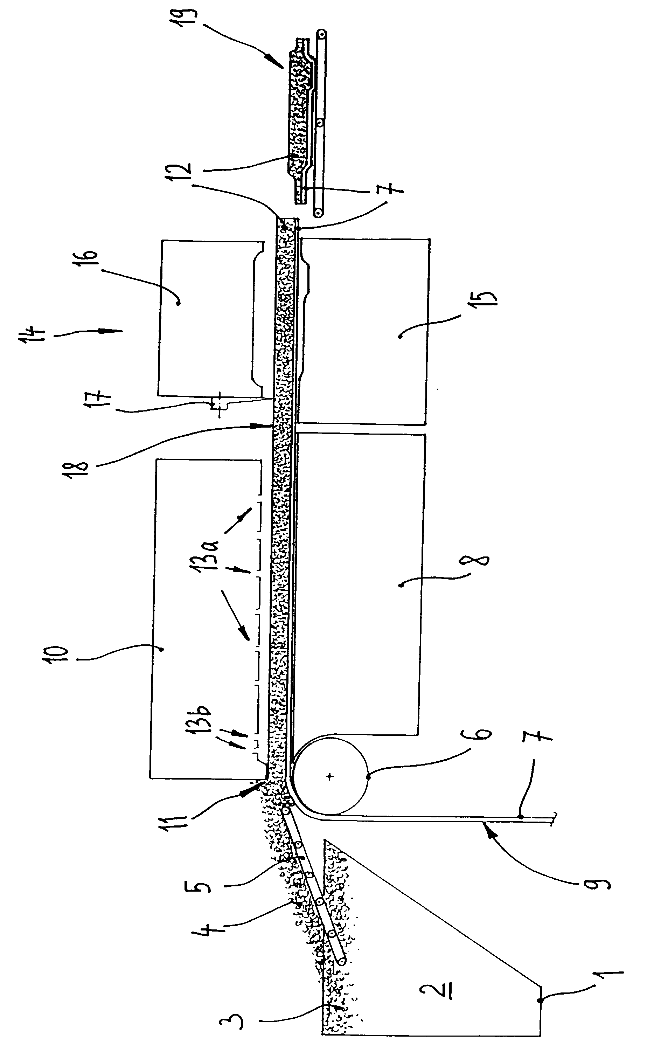

Ein mögliches Ausführungsbeispiel der Erfindung wird anhand der Zeichnung näher erläutert. Die einzige Figur zeigt eine Vorrichtung zur Herstellung eines Verbundbauteils in der Seitenansicht in stark schematisierter Darstellung.

In einem Schmelztiegel 1 befindet sich eine Aluminiumlegierung 2 im schmelzflüssigen Zustand. Durch Zuführen eines Gases setzt sich an der Oberfläche der Aluminiumschmelze 2 eine gasblasendurchsetzte Oberflächenschicht 3 aus Aluminiumschaum 4 ab. Über eine Fördereinrichtung 5 wird der Aluminiumschaum 4 zu einer als Umlenk- und Transporteinrichtung fungierenden Transportrolle 6 gebracht. Die Transportrolle 6 lenkt ein Aluminiumblech 7 um und führt es einer horizontalen Blechführung 8 zu. Über die Fördereinrichtung 5 wird der Aluminiumschaum 4 auf die Oberseite 9 des Aluminiumblechs 7 aufgebracht. Eine oberhalb der Transportrolle 6 angeordnete Regulierungseinrichtung 10 mit einer der Fördereinrichtung 5 zugewandten Abstreifkante 11 stellt die Dicke der Aluminiumschaumschicht 12 ein. Die Regulierungseinrichtung 10 weist Öffnungen 13a und 13b für die Zuführung von kalter oder warmer Luft auf. An die Regulierungseinrichtung 10 schließt sich eine Präge- und Schneideeinrichtung 14 an. Sie besteht aus einer unterhalb des Aluminiumbleches 7 angeordneten Prägeform 15, einem oberhalb der Aluminiumschaumschicht 12 angeordneten Prägestempel 16 und einem Schneidwerkzeug 17.

Sowohl der Transport des Aluminiumbleches 7 als auch der Transport des Aluminiumschaums 4 erfolgen kontinuierlich. Hierbei wird das Aluminiumblech 7 durch nicht dargestellte Einrichtungen sowohl vor der Transportrolle 6 als auch an der Transportrolle 6 und in der Blechführung 8 beheizt. Am Ende der Fördereinrichtung 5 wird der Aluminiumschaum 4 auf das sich unter der Fördereinrichtung 5 wegbewegende Aluminiumblech 7 aufgebracht. Die Regulierungseinrichtung 10 begrenzt die Höhe der Aluminiumschaumschicht 12. Sie ist ebenfalls beheizbar, so daß die Oberseite 18 der Aluminiumschaumschicht 12 möglichst glattflächig wird. Durch die Öffnungen 13a der Regulierungseinrichtung 10 kann entweder warme Luft zur weiteren Unterstützung der Oberflächenglättung oder kalte Luft zur Beschleunigung des Erstarrens der Aluminiumschaumschicht 12 eingeleitet werden. Die Zuführung von Geliermittel durch die Öffnungen 13b erleichtert die Bildung einer glatten Oberseite 18.

Durch die Formgebung von Prägeform 15 und Prägestempel 16 kann die Kontur des Verbundbauteils 19 bestimmt weren. Das Schneidwerkzeug 17 trennt vom durchlaufenden Aluminiumblech 7 die fertigen Verbundbauteile 19 ab.

## Patentansprüche

1. Verfahren zur Herstellung eines Verbundbauteils (19), bei dem auf zumindest einer Metallplatte (7) zumindest eine Metallschaumschicht (12) angeordnet ist,
dadurch gekennzeichnet, daß der Metallschaum (4) im formbaren Zustand auf die Metallplatte (7) aufgebracht wird.

2. Verfahren zur Herstellung eines Verbundbauteils nach Anspruch 1,
dadurch gekennzeichnet, daß die Metallplatte vor dem Aufbringen des Metallschaums (4) erwärmt wird.

3. Verfahren zur Herstellung eines Verbundbauteils nach Anspruch 1 und/oder Anspruch 2,
dadurch gekennzeichnet, daß die dem Metallschaum (4) zugewandte Oberfläche der Metallplatte vor dem Aufbringen des Metallschaums (4) mit einem Geliermittel versehen wird.

4. Verfahren zur Herstellung eines Verbundbauteils nach wenigstens einem der vorgenannten Ansprüche,
dadurch gekennzeichnet, daß der Metallschaum (4) über eine Zuführeinrichtung (5) kontinuierlich der Metallplatte (7) zugeführt wird, wobei die Zuführung in einer Richtung etwa parallel zur Ebene der Metallplatte (7) erfolgt und die Metallplatte (7) von der Zuführeinrichtung (5) wegbewegt wird.

5. Verfahren zur Herstellung eines Verbundbauteils nach Anspruch 4,
dadurch gekennzeichnet, daß im Bereich der Zuführeinrichtung (5) oberhalb der Metallplatte (7) eine Regulierungseinrichtung (10) zur Schichtdickeneinstellung des Metallschaums (4) vorgesehen ist.

6. Verfahren zur Herstellung eines Verbundbauteils nach Anspruch 5,
dadurch gekennzeichnet, daß die Regulierungseinrichtung (10) beheizt ist.

7. Verfahren zur Herstellung eines Verbundbauteils nach wenigstens einem der vorgenannten Ansprüche,
dadurch gekennzeichnet, daß Metallplatte und Metallschaumschicht (12) unmittelbar nach ihrer Zusammenführung gemeinsam verprägt werden.

8. Verfahren zur Herstellung eines Verbundbauteils nach wenigstens einem der Ansprüche 1 bis 3,
dadurch gekennzeichnet, daß eine Gußform verwendet wird, die im wesentlichen aus einem absenkbaren Oberteil und einem das Oberteil einhüllenden, umlaufenden Einfassungsteil besteht, wobei
in einem ersten Schritt das sich zumindest etwa lotrecht zur Metallplatte erstreckende Einfassungsteil auf die Metallplatte abdichtend aufgesetzt bzw. die Metallplatte in das Einfassungsteil abdichtend eingesetzt wird,
in einem zweiten Schritt der Metallschaum auf die Metallplatte aufgebracht wird und
in einem dritten Schritt das Oberteil in Richtung auf die Metallplatte abgesenkt wird.

9. Vorrichtung zur Durchführung des Verfahrens nach Anspruch 1, bei dem der Metallschaum über eine Zuführeinrichtung kontinuierlich einer sich von der Zuführeinrichtung wegbewegenden und als endloses Metallblech ausgebildeten Metallplatte zugeführt wird, mit einer im Bereich der Zuführeinrichtung (5) angeordneten Umlenkeinrichtung (6) für das Metallblech sowie mit einer Transporteinrichtung (6) für die Bewegung des Metallbleches weg von der Zuführeinrichtung (5).

10. Vorrichtung nach Anspruch 9,
wobei sich an die Zuführeinrichtung (5) eine Präge- und/oder Schneideeinrichtung (14) anschließt, die oberhalb des durchlaufenden Metallbleches (7) angeordnet ist und in Richtung lotrecht zum Metallblech (7) bewegbar ist.

11. Verwendung eines Verbundbauteils-bestehend aus einer Metallplatte und einer Metallschaumschicht und hergestellt nach einem Verfahren gemäß wenigstens einem der Ansprüche 1 bis 7 - als Karosseriebauteil für ein Kraftfahrzeug, wobei die der Metallschaumschicht (12) abgewandte Seite der Metallplatte (7) einen Teil der Karosserieaußenfläche bildet.

## Claims

1. A method of producing a composite component (19) wherein at least one metal foam layer (12) is disposed on at least one metal plate (7),
characterised in that the metal foam (4) is disposed in a mouldable state on the metal plate (7).

2. A method of producing a composite component according to claim 1,
characterised in that
the metal plate is heated before deposition of the metal foam (4).

3. A method of producing a composite component according to claim 1 and/or claim 2,
characterised in that before deposition of the metal foam (4), the surface of the metal plate facing the metal foam (4) is covered with a gelling agent.

4. A method of producing a composite component according to at least one of the preceding claims,
characterised in that the metal foam (4) is continuously fed by a feed device (5) to the metal plate (7), the feed occurring in a direction approximately parallel to the plane of the metal plate (7), and the metal plate (7) being moved away from the feed device (5).

5. A method of producing a composite component according to claim 4, characterised in that an adjusting device (10) for adjusting the thickness of the layer of metal foam (4) is provided in the region of the feed device (5) above the metal plate (7).

6. A method of producing a composite component according to claim 5, characterised in that the adjusting device (10) is heated.

7. A method of producing a composite component according to at least one of the preceding claims,
characterised in that the metal plate and the metal foam layer (12) are stamped together immediately after being brought together.

8. A method of producing a composite component according to at least of claims 1 to 3,
characterised by use of a casting mould substantially comprising a lowerable upper part and a peripheral frame part enclosing the upper part, wherein in a first step the frame part, which extends at least approximately perpendicularly to the metal plate, is placed in sealing-tight manner on the metal plate, or the metal plate is inserted in sealing-tight manner into the frame part,
in a second step the metal foam is deposited on the metal plate and in a third step the upper part is lowered towards the metal plate.

9. A device for working the method according to claim 1,
wherein a feed device continuously feeds the metal foam to a metal plate which moves away from the feed device and is in the form of an endless metal sheet, the device comprising a guide means (6) for the metal sheet, disposed in the region of the feed device (5), and also comprising a transport device (6) for moving the metal sheet away from the feed device (5).

10. A device according to claim 9, wherein a stamping and/or cutting device (14) adjoins the feed device (5) and is disposed above the continuous metal sheet (7) and is movable in the direction perpendicular to the metal sheet (7).

11. Use of a composite component comprising a metal plate and a metal foam layer and produced by a method according to at least one of claims 1 to 7, as a component of a motor vehicle body, wherein the side of the metal plate (7) remote from the metal foam layer (12) forms a part of the outer surface of the body.

## Revendications

1. Procédé de fabrication d'une pièce composite (19), selon lequel on réalise au moins une couche de mousse métallique (12) sur au moins une plaque métallique (7),
caractérisé en ce que
on applique la mousse métallique (4) à l'état déformable sur la plaque métallique (7).

2. Procédé de fabrication d'une pièce composite selon la revendication 1,
caractérisé en ce qu'on chauffe la plaque métallique avant d'appliquer la mousse métallique (4).

3. Procédé de fabrication d'une pièce composite selon la revendication 1 et/ou la revendication 2,
caractérisé en ce que
la face supérieure de la plaque métallique tournée vers la mousse métallique (4) reçoit un gel avant l'application de la mousse métallique (4).

4. Procédé de fabrication d'une pièce composite selon au moins l'une des revendications précédentes,
caractérisé en ce que
la mousse métallique (4) est fournie par une installation d'alimentation (5) en continu sur la plaque métallique (7), l'alimentation se fait dans une direction sensiblement parallèle au plan de la plaque métallique (7) et la plaque métallique (7) s'éloigne de l'installation d'alimentation (5).

5. Procédé de fabrication d'une pièce composite selon la revendication 4,
caractérisé en ce que
au niveau de l'installation d'alimentation (5), au-dessus de la plaque métallique (7), il est prévu une installation de régulation (10) pour régler l'épaisseur de la couche de mousse métallique (4).

6. Procédé de fabrication d'une pièce composite selon la revendication 5,
caractérisé en ce que
l'installation de régulation (10) est chauffée.

7. Procédé de fabrication d'une pièce composite selon au moins l'une des revendications précédentes,
caractérisé en ce que
la plaque métallique et la couche de mousse métallique (12) sont matricées en commun directement après leur réunion.

8. Procédé de fabrication d'une pièce composite selon au moins l'une des revendications 1 à 3,
caractérisé en ce que
on utilise un moule de coulée qui se compose principalement d'une partie supérieure susceptible d'être abaissée et d'une partie de réception, qui tourne, et qui entoure la partie supérieure,
- au cours d'une première étape, la partie de réception qui s'étend au moins sensiblement verticalement par rapport à la plaque métallique est appliquée de manière étanche sur la plaque métallique, ou la plaque métallique est placée de manière étanche dans la partie de réception,
- dans une seconde étape on applique la mousse métallique sur la plaque métallique, et
- dans une troisième étape, on abaisse la partie supérieure en direction de la plaque métallique.

9. Dispositif pour la mise en oeuvre du procédé selon la revendication 1,
selon lequel
la mousse métallique est fournie en continu par une installation d'alimentation à une plaque métallique en forme de tôle métallique sans fin, qui s'écarte de cette installation d'alimentation, avec une installation de renvoi (6) prévue au niveau de l'installation d'alimentation (5) pour la tôle métallique, ainsi qu'une installation de transport (6) pour éloigner la tôle métallique de l'installation d'alimentation (5).

10. Dispositif selon la revendication 9,
selon lequel
l'installation d'alimentation (5) se poursuit par une installation de matriçage et/ou de découpage (14) au-dessus de la tôle métallique qui défile, et qui est mobile dans une direction verticale par rapport à la tôle métallique.

11. Application d'une pièce composite composée d'une plaque métallique et d'une couche de mousse métallique, fabriquées selon le procédé correspondant à au moins l'une des revendications 1 à 7, comme pièce de carrosserie pour un véhicule automobile,
le côté de la plaque métallique (7) opposé à la couche de mousse métallique (12) formant une partie de la surface extérieure de la carrosserie.
